# EUROPEAN PATENT SPECIFICATION

(11) **EP 2 441 991 B1**
(45) Date of publication and mention of the grant of the patent: **20.04.2016**
(21) Application number: 11185078.0
(22) Date of filing: 13.10.2011
(51) Int. Cl.: F16K 5/06, F16K 31/04, F24D 19/10, F24F 3/06

(54) **A fluid regulating valve for plants, in particular conditioning plants**
Flüssigkeitsventil, insbesondere für Klimaanlagen
Vanne de règulation, en particulier pour dispositifs de conditionnement

(30) Priority: 14.10.2010 IT MI20101882
(43) Date of publication of application: 18.04.2012
(73) Proprietor: FIMCIM S.P.A., 20121 Milano (MI) (IT)
(72) Inventor: Cimberio, Roberto, 20121 Milano (IT); Guidetti, Tiziano, 20121 Milano (IT)
(74) Representative: Sutto, Luca

(56) References cited:
- EP-A2- 1 116 921
- WO-A1-99/60291
- US-A- 5 131 623
- US-A- 5 540 414

## Description

### FIELD OF THE INVENTION

The present invention relates to a fluid regulating valve for conditioning plants. The regulating valve of the invention enables controlling a flow internally of a circuit. The valve has a broad field of use, as it contemporaneously combines a high degree of precision and rapidity on the control of the fluid; purely by way of example, a typical application can be made in conditioning plants where an appropriate management of the flow crossing the plant is required so as to keep account of the frequent variations in flow rates to the various users.

### PRIOR ART

As is known, flow regulating valves exist on the market which enable regulating a flow rate, pressure or pressure differential between two distinct points of a plant in which the valve is installed.

In a first example, illustrated in application US2007/0125432, use is made of a regulating valve with an inlet, an outlet and a membrane for receiving pressure signals and regulating a flow between the inlet and the outlet. The membrane works in opposition to a spring and at least partially checks the flow between the inlet and the outlet, thus determining a pressure difference between inlet and outlet of the valve. The position of the membrane is linked to the pressure of the fluid crossing the valve and to a further pressure signal coming from another point of the plant. The pressure of the fluids in contact with the membrane determines the position of the membrane, which increases or reduces the passage of fluid between inlet and outlet.

A second example, illustrated in application WO2010/074921 shows a flow control or load loss valve; the valve is provided with a control system for setting a reference value of the desired load loss or the desired flow rate value and for automatically regulating the position of an obturator.

A third example, illustrated in Korean application KR100835707, includes use of a flow regulating valve. The valve comprises an inlet opening, an outlet opening and an obturator. On the basis of the difference of pressure between a predetermined point of the plant and the point in which the valve is installed, the position of the obturator is modulated in opposition to the action of a spring directly connected to the obturator. The valve is provided with a system for regulating the spring preload; by regulating the preload it is possible to control the pressure difference between the point at which the pressures are read. WO 99/60291, US 2003/0192595, EP 1 116 921 show further examples of flow regulating valves.

### SUMMARY OF THE INVENTION

A first aim of the present invention is to provide a valve enabling setting a series of values relating to physical parameters of the fluid circulating in the plant and which is able to regulate the flow of fluid on the basis of said settings.

A further aim of the invention is to provide a valve that is sensitive to pressure or flow variations internally of the circuit in which the valve is predisposed, enabling an automatic control of the fluid flow in at least a branch of the plant. A further aim of the invention is to provide a valve able to increase the sensitivity of the flow control.

A further aim of the invention is to provide a valve having a long operating path in which the sensitivity to flow variation is not compromised.

One or more of the above-mentioned aims is substantially attained by a valve according to one or more of the appended claims.

Further aspects of the invention are described below.

A 1st aspect includes a regulating valve for fluid plants, in particular conditioning plants, comprising: at least a valve body exhibiting at least an inlet, at least an outlet and at least a channel which sets the inlet in fluid communication with the outlet, at least a check element of fluid operating in the channel and forming the regulating organ together with the valve body, the fluid check element defining, in cooperation with the valve body, a passage opening for fluid between the inlet and the outlet of a variable size according to positions assumed by the check element in relation to the valve body along a predetermined operating path; and at least a control device configured to:
➢ receive in input at least a first signal relating to an intensity of a physical parameter of the fluid circulating in the first section of the plant and a second signal relating to the intensity of a physical parameter of a fluid circulating in the second section of the plant,
➢ generate the output signal as a function of the first signal and the second signal, said output signal being used to control the angular position of the check element, and wherein
the control device is configured such as to move the check element in a plurality of operating positions which are reciprocally angularly offset, wherein an angular step is defined between an operating position and an angularly subsequent operating position, the control device repeating the receiving and generating stages of receiving and generating in a predetermined number of the operating positions, optionally at each thereof, wherein the size of the angular step is a function of the intensity of the physical parameter of the fluid circulating in the first section and the intensity of the physical parameter of the fluid circulating in a second section of the plant, and wherein the angular step reduces progressively on reduction of a difference between a reference value and a real value given by a difference of intensity of the physical parameter of the fluid circulating in the first section and the intensity of the physical parameter of the fluid circulating in a second section.

In a 2nd aspect in accordance with the 1st aspect the check element is configured such as to rotate with respect to a rotation axis which extends transversally with respect to a prevalent axis of development of said channel.

In a 3rd aspect in accordance with the 2nd aspect the control device is configured such as to move the check element among a plurality of distinct operating positions which are angularly offset to one another. The angular positions are separate and at each distinct angular position the control device is configured such as to evaluate, on the basis of the output signal, whether an additional angular displacement is required or not. An angular step is defined between an operating position and a next angular operating position. In practice a step is understood to mean the angular distance between the distinct positions of the check element and is configured such as to perform the said evaluation. In a 4th aspect in accordance with the previous aspect, the angular step, at least for a predetermined tract of the operative path, is less than 1° (one degree).

In a 5th aspect in accordance with any one of the preceding 3rd or 4th aspects, the angular step, at least for the predetermined tract of the operative path, is less than 0.5° (half a degree).

In a 6th aspect in accordance with any of the above aspects from the 3rd to the 5th, the angular step, at least over a predetermined tract of the operating path, is less than 1°, optionally less than 0.5%; and/or wherein the angular step is not constant over the operating path, optionally wherein the tract in which the step is not constant comprises at least 10% of the operating path.

In a 7th aspect in accordance with any of the above aspects from the third to the sixth, where the angular step reduces progressively, optionally exponentially, for a stretch that includes at least 10% of the operating path.

In an 8th aspect according to any of the above aspects from 3rd to 7th, the control device regulates the angular step as a function of the measurements, for example of pressure, in the two sections. For example the control device is configured such as to reduce the angular step progressively on reduction of a difference between a reference value and a real value given by a difference of intensity of the physical parameter of the fluid circulating in the first section and the intensity of the same physical parameter of the fluid circulating in a second section.

In a 9th aspect in accordance with any of the above aspects from 3rd to 8th, the tract of the operating path in which the step is not constant and/or is less than 1° comprises an initial tract of the operating path, the initial tract being in turn comprised between an initial position of complete closure of the passage opening and an intermediate position in which the passage opening is open to not more than 40%.

In a 10th aspect in accordance with any of the above aspects from 3rd to 9th, the tract of the operating path in which the step is not constant and/or is less than 1° comprises an initial tract of the operating path, the final tract being in turn comprised between a final position of complete opening of the passage and an intermediate position in which the passage opening is open to not more than 30%.

In a 11 th aspect in accordance with any of the above aspects from 3rd to 10th, the tract of the operating path in which the step is not constant and/or is less than 1° comprises a final tract of the operating path, the final tract being in turn comprised between a final position of complete opening of the passage opening and an intermediate position in which the passage opening is open to not more than 50%.

In a 12th aspect in accordance with any of the above aspects from 3rd to 11th, the tract of the operating path in which the step is not constant and/or is less than 1° comprises a final tract of the operating path, the final tract being in turn comprised between an final position of complete closure of the passage opening and an intermediate position in which the passage opening is open to not more than 40%.

In a 13th aspect in accordance with any of the above aspects, the check element has an external surface rotating about said axis which exhibits a substantially spherical or cylindrical conformation.

In a 14th aspect in accordance with any of the above aspects, the valve body exhibits at least a wall located transversally of the prevalent development axis of the channel and respectively exhibiting a passage opening, said wall being arranged upstream and/or downstream of the check element such as to define the shape of that passage opening. In practice, the wall is a shaped diaphragm and in cooperation with the opening of the check element defines the shape of the passage opening.

In a 15th aspect in accordance with any one of the preceding aspects, the passage opening is conformed such that following a movement of the check element over said initial and/or a final tract of said operating path, the incremental ratio between the percentage variation of the area of the passage opening and the percentage displacement of the check element exhibits an absolute value comprised between 0 and 4,
wherein the percentage variation of the area of the passage opening comprises the ratio between the variation of the passage area following a displacement of the check element and a reference area, and wherein said percentage displacement comprises the ratio between the displacement of the check element and the operating path.

In a 16th aspect in accordance with any one of the preceding aspects, the passage opening is shaped such that following a movement of the check element over said initial and/or a final tract of the operating path, the incremental ratio between the percentage variation of the area of the passage opening and the percentage displacement of the check element exhibits an absolute value comprised between 0 and 2.5.

In a 17th aspect in accordance with any one of the preceding aspects, the passage opening is shaped such that following a movement of the check element over an initial and/or a final tract of the operating path, the incremental ratio between the percentage variation of the area of the passage opening and the percentage displacement of the check element exhibits an absolute value comprised between 0 and 1.5.

In a 18th aspect in accordance with any one of the preceding aspects from 15th to 17th, the incremental ratio between the percentage variation of the area of the passage opening and the percentage displacement of the check element, over the initial tract comprising not more than 30% of the operating path, exhibits an absolute value comprised between 0 and 4.

In a 19th aspect in accordance with any one of the preceding aspects from 15th to 18th the incremental ratio between the percentage variation of the area of the passage opening and the percentage displacement of the check element, over the initial tract comprising not more than 30% of the operating path, exhibits an absolute value comprised between 0 and 2.5.

In a 20th aspect in accordance with any one of the preceding aspects from 15th to 19th the incremental ratio between the percentage variation of the area of the passage opening and the percentage displacement of the check element, over the final tract comprising not more than 30% of the operating path, exhibits an absolute value comprised between 0 and 4.

In a 21 st aspect in accordance with any of the preceding aspects from 15th to 20th the incremental ratio between the percentage variation of the area of the passage opening and the percentage displacement of the check element, over the final tract comprising not more than 40% of the operating path, exhibits an absolute value comprised between 0 and 2.5.

In a 22nd aspect in accordance with any of the preceding aspects from 15th to 21st the incremental ratio between percentage variation of the area of the passage opening and the percentage displacement of the check element exhibits an absolute value which is substantially constant over an intermediate tract of the operating path comprised between the initial tract and the final tract, and wherein the intermediate tract comprises between 20% and 40% of the operating path.

In a 23rd aspect in accordance with any of the preceding aspects said first and second signal are related to the intensity of the fluid pressure in said first and second section of the plant.

In a 24th aspect in accordance with any one of the preceding aspects generating an output signal comprises determining a control differential signal comprising a difference or a ratio between the intensity of the first signal and the second signal.

In a 25th aspect in accordance with any one of the preceding aspects, generating the output signal comprises determining a control differential signal comprising a difference or a ratio between the intensity of the first signal and the second signal, wherein the control differential signal comprises the difference or ratio between the intensity of the fluid pressure in said first section and the intensity of the fluid pressure in the second section, optionally wherein the control device comprises a pressure differential gauge which receives in input the first signal and the second signal and generates in output the control differential signal.

In a 26th aspect in accordance with any one of the preceding aspects, the control device is configured to:
enable setting at least a reference value,
compare the reference value with the value of the control differential signal, generate the output signal as a function of the comparison.

In a 27th aspect in accordance with any one of the preceding aspects, the control device comprises an actuator, for example an electrical actuator, acting on the check element, said actuator enabling displacement of the check element along the operating path.

In a 28th aspect in accordance with the preceding aspect, the control device is connected with said actuator, the control device further being configured such as to command a movement of the check element as a function of the output signal and to position the check element according to the plurality of positions along the operating path.

In a 29th aspect in accordance with any one of the preceding aspects 27th or 28th, the control device controls the size of the angular step according to which the actuator moves the check element in accordance with the value of the control differential signal and a reference value, optionally wherein the control device controls the size of the angular step according to which the actuator moves the check element in accordance with the difference between the control differential signal and the reference value.

In a 30th aspect in accordance with any one of the preceding aspects, said regulating valve comprises acoustic signalling means and/or optical signalling means, said acoustic and/or the optical signalling means being connected to the control device which is configured such as to command said signalling means to provide:
an optical and/or acoustic representation of an instant value of the output signal, and/or
an optical and/or acoustic representation of displacement of an instant value of the output signal with respect to a reference value.

In a 31st aspect in accordance with any one of the preceding aspects, the control device is configured to control a movement of the check element thereby enabling a reduction in the difference between the reference value and the value of the control differential signal.

In a 32nd aspect in accordance with any one of the preceding aspects, said control device includes setting means, said setting means being connected to the control device, the control device being configured such as to enable a setting of a predetermined number of control parameters that define the working conditions of the valve.

In a 33rd aspect in accordance with any one of the preceding aspects, said control parameters comprising at least a parameter selected from the group having:
a first control parameter relating to a type of movement of the check element,
a second control parameter relating to a maximum excursion of the values of the first signal and the second signal or of the value of the difference between the first signal and the second signal,
a third control parameter relating to the type of function connecting the output signal and the first signal and the second signal,
a fourth control parameter relating to a velocity of convergence between the real value and the reference value.

In 34th aspect in accordance with preceding aspect 33rd, said second control parameter comprises bottom scale values of the pressure differential gauge.

In a 35th aspect in accordance preceding aspects 33rd or 34th, in relation to the third parameter, said function comprises a link of a proportional or integral or derivate type, or a combination thereof.

In a 36th aspect in accordance with the 33rd or 34th or 35th aspects said fourth control parameter specifies a convergence time defined as a time transitory in which the value of the control differential signal converges to the reference value.

In a 37th aspect in accordance with 33rd or 34th, 35th or 36th aspects said setting means enable memorisation of a predetermined number of configurations relating to values of the control parameters which are useful for managing the control device, optionally wherein the setting means comprise micro switches.

In a 38th aspect in accordance with any one of the preceding aspects, said regulating valve further comprises a temperature sensor positioned on the valve body, the temperature sensor enabling detection of the temperature at the second section.

In a 39th aspect in accordance with any one of the preceding aspects, said control device further comprises input means, said input means enabling setting at least a reference value, optionally enabling setting a reference pressure differential between the first and the second section.

In a 40th aspect in accordance with any one of the preceding aspects said control device comprises a memory and is configured such as to enable memorising a plurality of predetermined reference values and for enabling selection of at least one of those values on the part of a user.

In a 41st aspect in accordance with one of the preceding aspects said check element has a lateral surface of rotation of cylindrical or spherical shape. In a 42nd aspect in accordance with any of the one of the preceding aspects said passage opening comprises a frontal shaping exhibiting two substantially symmetrical parts wherein each of the parts exhibits a first portion shaped as an arc of a circle, a second portion shaped as an arc of a circle having a smaller radius than the arc of said first portion, a connecting inflection which connects said first portion with the second portion.

In a 43rd aspect in accordance with any one of the preceding aspects said passage opening comprises a longitudinal shaping, relating to a longitudinal section with respect to the prevalent development axis of the channel, exhibiting a progressively growing section from said inlet to said outlet of the valve body.

In a 44th aspect in accordance with any one of the preceding aspects wherein said control device is configured such as to receive the control parameters and, depending on the value thereof, adjust the rotation direction of the check element according to said axis which extends transversally to the axis of the prevalent development axis.

In a 45th aspect in accordance with any with any one of the preceding aspects said first section is defined at the valve body, said regulating valve comprising a passage which places said channel in fluid communication with the differential pressure gauge.

In a 46th aspect in accordance with any with any one of the preceding aspects said check element operating in said channel of the valve body is configured such as to rotate according to a movement angle with respect to a rotation axis which extends transversally with respect to a prevalent development axis of said channel, optionally in which said check element exhibits a lateral rotation surface having a cylindrical or spherical conformation.

In a 47th aspect in accordance with the preceding aspect the incremental ratio between the percentage variation of the area of the passage opening and the percentage displacement of the check element, for the initial tract comprised between 20 % and 30% of the operating path, falls within a range of between 0 and 1.5.

In a 48th aspect according to any of aspects 46th or 47th, the incremental ratio between the percentage variation of the area of the passage opening and the percentage displacement of the check element, for the final tract comprised between 20 % and 30% of the operating path, falls within a range of between 0 and 1.5.

A 49th aspect relates to a fluid distribution plant to a plurality of users, in which the plant uses one or more of the valves according to any one of aspects 1 to 48th.

A 50th aspect relates to a conditioning plant comprising: at least a general inlet, at least a general outlet, a circuit which sets the general inlet in fluid communication with the general outlet, a plurality of users arranged on the circuit, at least a balancing system or the flow acting on said circuit, said balancing system comprising:
➢ at least a sensor for detecting at least a real value depending on a difference of intensity between a first section upstream of the users and a second section downstream of the users, of at least a physical parameter of the fluid,
➢ at least a flow regulating organ,
➢ at least a control device connected to the sensor, acting on the flow regulating organ and configured for enabling memorisation of at least a reference value of a same physical parameter of the fluid, comparing the reference value with the real value, commanding the regulating organ via an output signal in order to regulate the fluid internally of the circuit such as to maintain the real value substantially aligned with the reference value, or such as to reduce a difference between real value and reference value wherein the regulating organ and the control device are part of a regulating valve operating downstream of the users, wherein the regulating valve has the characteristics of any one of the aspects from the first to the forty-eighth.

In a 51st aspect according to the 50th aspect, the plant comprises a first detecting line which places a first point of the circuit situated upstream of each user in fluid communication with the sensor of the balancing system, and a second detection line hich sets a second point of the circuit situated downstream of each user in fluid communication with the sensor of the balancing system.

In a 52nd aspect according to aspect 51st, said second point is situated substantially on said regulating organ, said regulating organ being situated downstream of each user, directly connected on the circuit and in fluid communication with the sensor.

In a 53rd aspect according to aspects 50th, or 51st, or 52nd the sensor is a differential sensor, which enables detecting the intensity difference between upstream and downstream of the user of the physical parameter of the fluid, and wherein said sensor detects a difference between a first real value relative to the intensity of the physical parameter at the first point of the circuit, and a second real value relative to the intensity of the physical parameter relative to the second point of the circuit.

In a 54th aspect according to aspects 50th, or 51st, or 52nd said sensor comprises a first sensor which is in fluid connection with the first detecting line and enables detecting the intensity of the physical parameter at the first point of the circuit, and a second sensor which is in fluid connection with the second detecting line and enables detecting the intensity of the physical parameter at the second point of the circuit.

In a 55th aspect according to any of the preceding aspects from 50th to 54th, each user 4 comprises a respective delivery channel 6 emerging from the circuit , a respective return channel in fluid connection with the delivery channel and arranged such as to return fluid into the circuit, at least a user device hydraulically interposed between the delivery channel and the return channel. In a 56th aspect according to any of the above aspects from 50th to 55th, each user comprises a respective delivery channel emerging from the circuit, a respective return channel in fluid connection with the delivery channel and arranged such as to return fluid into the circuit, at least a user device hydraulically interposed between the delivery channel and the return channel and wherein each user exhibits at least a respective closing organ, partial or total, arranged either on the delivery channel or on the return channel.

In a 57th aspect according to any one of the preceding aspects 55th or 56th the plant comprises at least a delivery manifold arranged upstream of the users, at least a return manifold arranged downstream of the users, the delivery manifold and the return manifold being respectively connected to the general inlet for the distribution of the fluid to the users and to the general outlet for collecting the fluid in outlet from the users.

In a 58th aspect according to the preceding aspect, the regulating organ is engaged to a line interposed between an outlet of the return manifold and the general outlet.

### BRIEF DESCRIPTION OF THE DRAWINGS

Some embodiments and some aspects of the invention will be described in the following with reference to the accompanying figures of the drawings, provided by way of non-limiting example, in which: not part of the claimed invention
Figure 1 illustrates a first conditioning plant not part of the claimed invention;
Figure 2 illustrates a second conditioning plant;
Figure 2a illustrates a third conditioning plant;
Figure 3 is a perspective view of a valve used in the plants of figures 2-2a;
Figure 4 is a front view of the regulating valve of figure 3 in a first use condition;

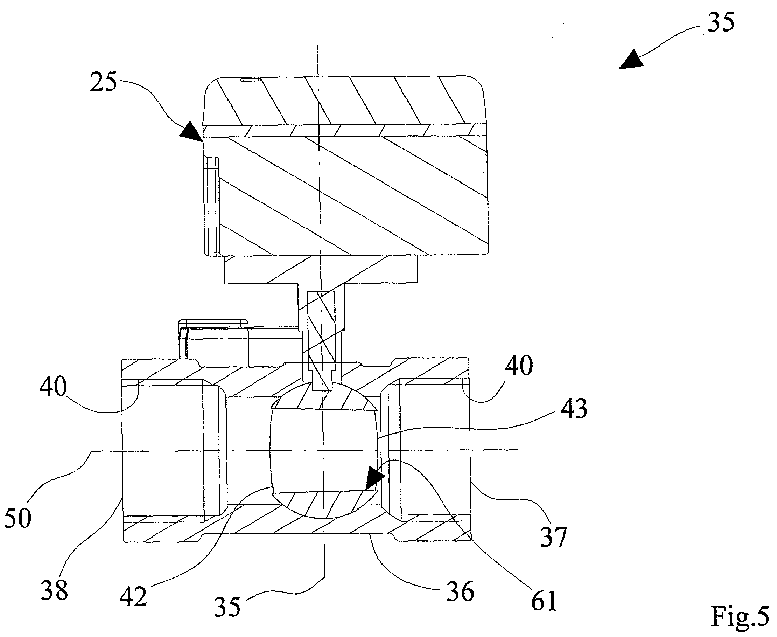

Figure 5 is a section view of the regulating valve of figure 3;
Figure 6 is a front view of the regulating valve of figure 3 in a second use condition;
Figure 7 is a front view of the regulating valve of figure 3 in a third use condition;

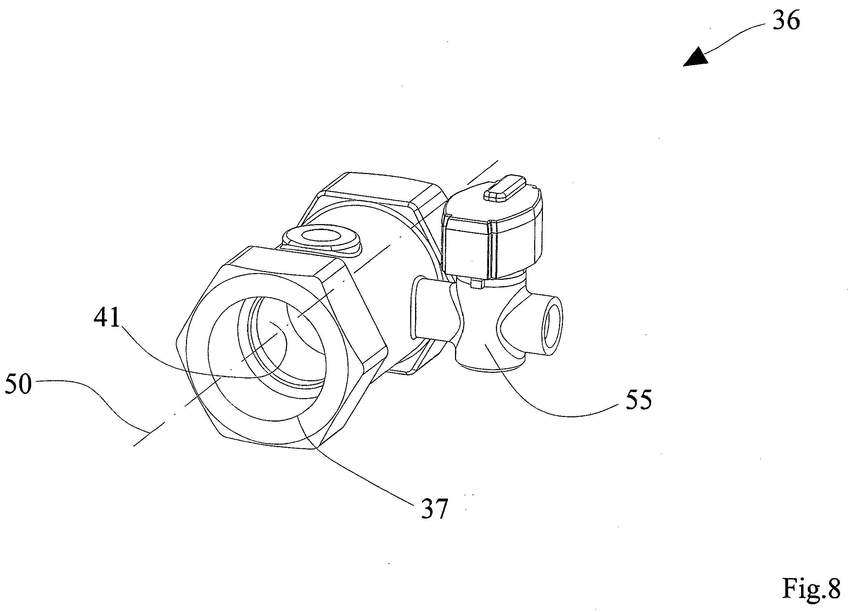

Figure 8 is a perspective view of the valve body of the valve of figure 3;

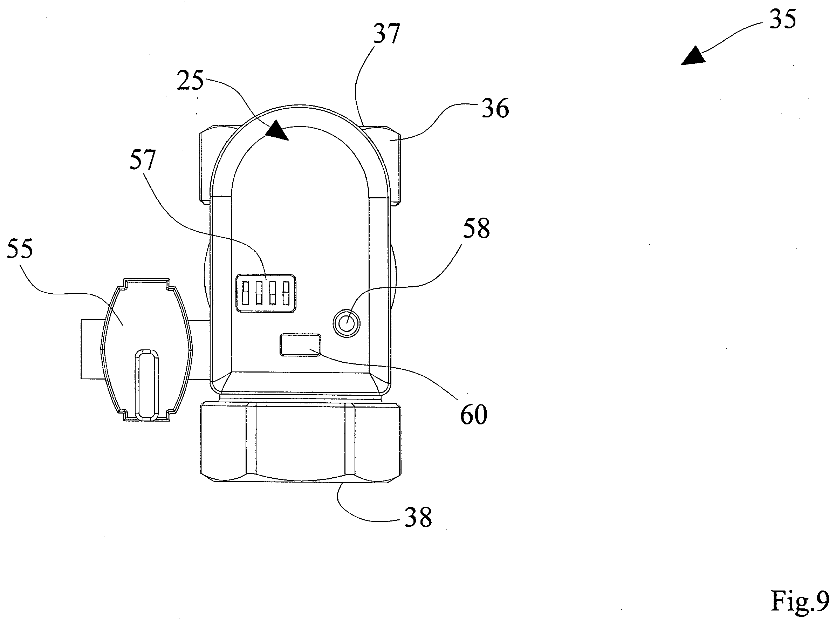

Figure 9 is a view from above of an alternative embodiment of a regulating valve;
Figure 10 is a front view of the valve of figure 9;

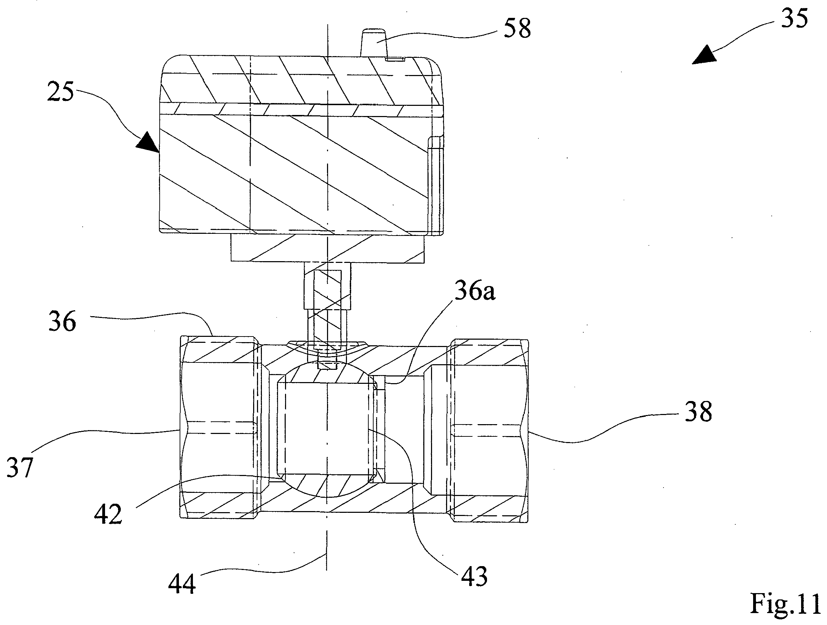

Figure 11 is a section along line XI-XI of figure 10; and
Figure 12 is a comparative diagram relating to the characteristics of two valves that relates the percentage area of the passage opening with the percentage displacement of the check element.

### DETAILED DESCRIPTION

With reference to the accompanying figures of the drawings, 1 denotes in its entirety a conditioning plant comprising a general inlet 2, a general outlet 3, a circuit 4 placing the general inlet in fluid communication with the general outlet 3. Both the general inlet and the general outlet avail of an inlet valve 2a and an outlet valve 3a, for example of a sphere or shutter type, which regulate the general flow internally of the circuit 4.

The circuit supplies a fixed number of user units 5 (herein indicated as users), for example, each comprising one or more heat exchangers and related groups of ventilation (fan coil), which are arranged at or near areas to be conditioned. Heat exchange takes place inside the users 5, enabled by the fluid supply from the general inlet 2.

The circuit exhibits at least two main channels: a delivery channel 6, for sending the fluid to the users, and a return channel 7 in connection with the delivery channel 6 and arranged such as to receive the fluid downstream of the users. The users 5 are hydraulically interposed between the delivery channel 6 and the return channel 7. Before being distributed to the various utilities the fluid is intercepted by a filter 8 which prevents impurities from reaching the users.

The delivery channel 6 and the return channel 7 are respectively connected to a delivery manifold 10 upstream of the users 5 and a return manifold 11 downstream of the users 5. The delivery manifold 10 and the return manifold 11 are connected respectively to the general inlet 2, for the distribution of the fluid to the users 5, and the general outlet 3, for the collection of the fluid in outlet from the users 5.

The conditioning plant also includes, for each user, at least one respective delivery line 6a exiting from the delivery manifold, and leading to the users; a respective partial or total closing organ 9 acts on each delivery line 6a. The closing organs 9 intercept the fluid in inlet to the users 5. The organs 9 are activated such as to vary the supply parameters of a determined user; in particular each closing organ can comprise an on/off valve which closes or opens supply to each user 5.

The return manifold 7 receives from each user a respective return line 12; on each return line a balancing valve 13 is placed whose function is to regulate the flow in outlet from the users as a function of temperature requirements required for each environment in which the user 5 is installed.

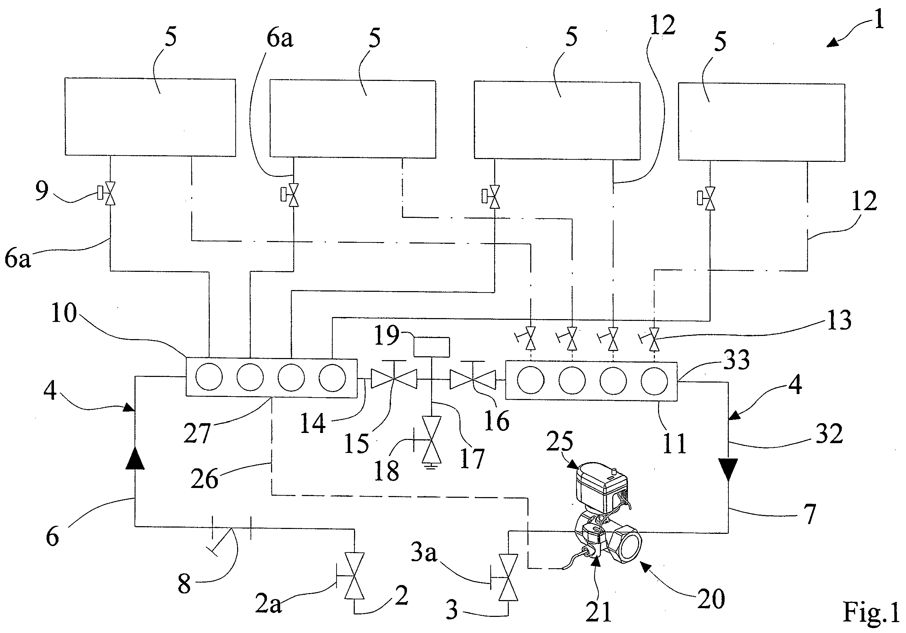

The plant of fig 1 also has a connecting circuit 14, which sets the delivery manifold 10 in fluid communication with the return manifold 11, bypassing the users. A shut-off valve 15 of the manifold 10 and a shut-off valve 16 of the return manifold 11 are arranged on the connecting circuit 14. The connecting circuit 14 is in turn in fluid connection with a discharge 17 interposed between the respective closing valves of the delivery manifold closing valve and return valve. The discharge 17 exhibits a general discharge valve 18 configured for discharging excess fluid present in the connecting circuit 14 after the circuit 4 setting. In addition to the general discharge valve 18, the drain circuit 17 exhibits a breather valve 19, positioned in a higher position than the manifolds and useful for eliminating any air bubbles inside the circuit 4.

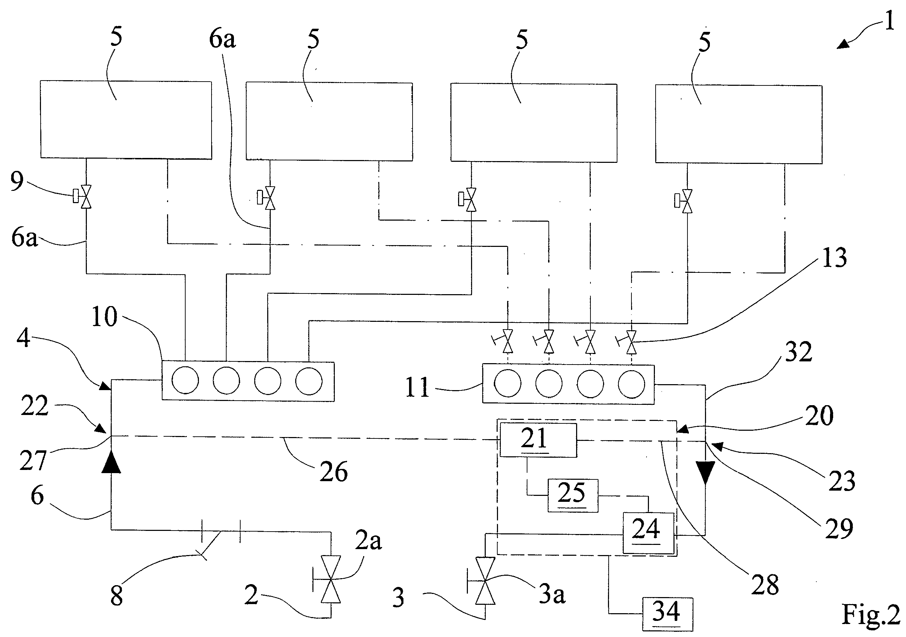

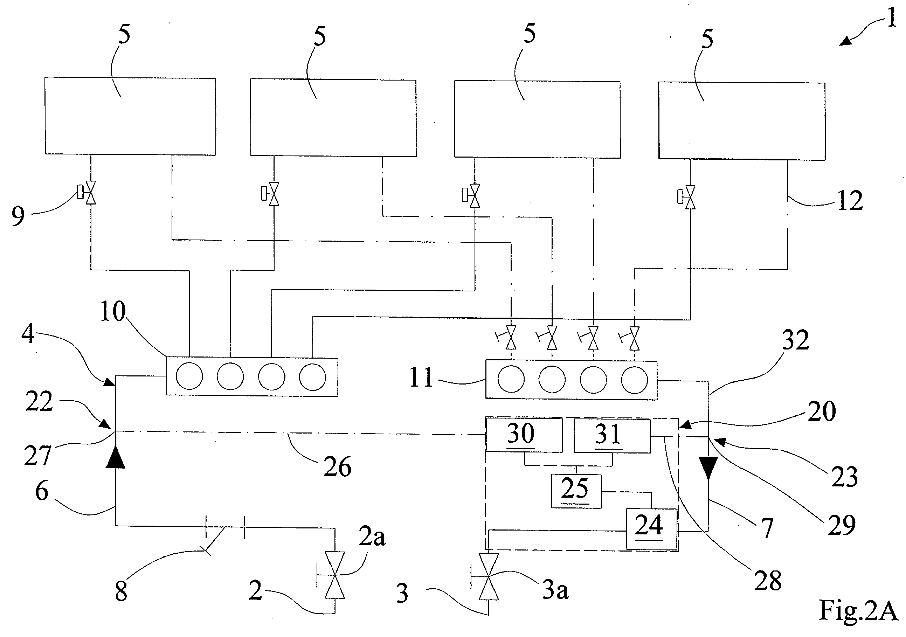

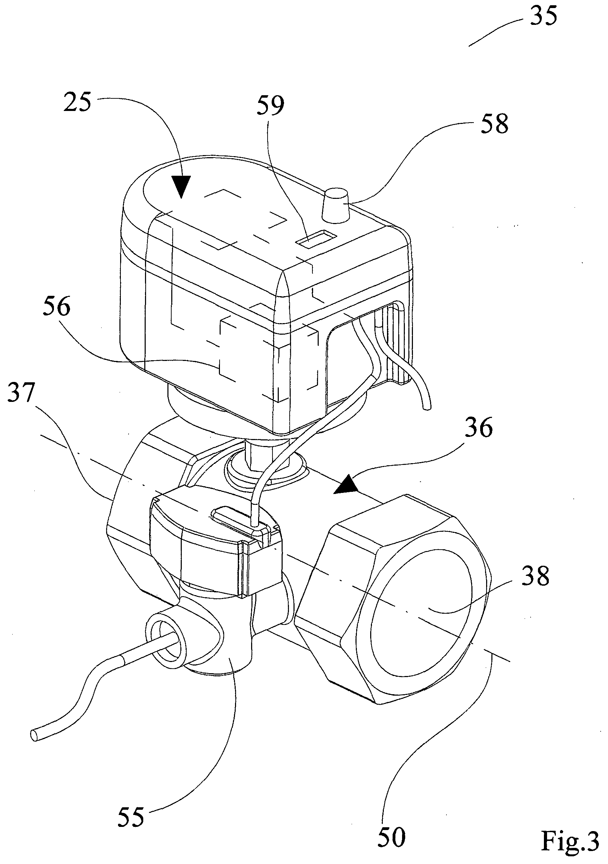

The air conditioning plant 1 comprises a flow balancing system 20, active on the circuit 4. The balancing system 20 comprises at least a sensor 21 for detecting a real value which is dependent on the difference of intensity that a same physical parameter, such as a pressure or flow, assumes between a first section 22 upstream of the users 5 and a second section 23 downstream of the users. More specifically, the sensor can measure for example a difference or ratio between the real pressure in the section 22 and the pressure in the section 23, providing an output signal that is proportional to said difference or ratio between the pressures in the two above-cited sections. As it is shown in figures 2 and 3, the balancing system further exhibits a flow regulating organ 24 and a control device 25 connected to the sensor 21 and active on the flow regulating organ 24. In practice, the control device comprises a control unit, for example a microprocessor, capable of receiving the input signal from the sensor/s 21 and acting on the regulating organ as a function of the signal. According to one embodiment, the balancing system 20 is placed in connection with two detecting lines. More specifically, a first detecting line 26 places in fluid communication a first point 27, part of the first section 22 of the circuit 4 and located upstream of each user 5, with the sensor 21 of the balancing system 20; a second detecting line 28 places in fluid communication a second point 29, part of the second section 23 of the circuit 4 and located downstream of each user 5, with the sensor 21 of the balancing system 20. The sensor 21, for example a differential sensor, is configured such as to detect the difference in intensity between upstream and downstream of the users 5, the physical parameter of the fluid. In more detail, the sensor 21 detects a difference between a first real value related to the intensity of the physical parameter at the first point 27 of the circuit 4, and a second real value of the intensity of the same physical parameter related to the second point 29 of the circuit 4. The second point 29 is for example located substantially on the regulating organ, which is arranged downstream of each user 5, directly connected to the circuit 4 and in fluid connection with the sensor 21. If the detected parameter is the pressure, the sensor 21 includes a pressure differential sensor which generates an output signal proportional to the intensity or a function of the pressure difference between points 27 and 29.

Alternatively to the use of a differential sensor, a different configuration of the circuit can be realised in which the sensor 21 comprises a first sensor 30, in fluid connection with the first detecting line 26, which enables detecting the intensity of the physical parameter at the first point 27 of the circuit 4, and a second sensor 31, which is in fluid connection with the second detecting line 28, which detects the intensity of the same physical parameter at the second point 29 of the circuit 4.

The return channel 7 can comprise a line 32, interposed between a general outlet 33 of the return manifold 11 and the general outlet 3 of the plant 1, on which the regulating organ 24 is engaged.

As previously mentioned, the first point 27 is located upstream of the users 5, in particular, the first point 27 can be located substantially on the delivery manifold 10, while the second detecting point 29 is located on the regulating organ 24. As for the control device 25, it is connected to the above-described sensor/s and with the regulating organ. The control device is configured such as to enable a memorising of a reference value for the physical parameter of the fluid being measured with the described sensors. For example, the control device may comprise one or more microprocessor unit/s and associated memories capable of storing a code which when executed by the microprocessor unit/s makes the control device capable of performing the procedures described below. The control device is also configured such as to compare the reference value with the real value in relation to the same physical parameter, and such as to control the regulating organ 24 via an output signal such as to regulate the flow of fluid within the circuit 4 such as to maintain the value substantially aligned with the reference value. For example, the control device is configured to determine the real value as the difference between the values of the physical parameter measured in the first and second section by the sensor/s 21 (for example the difference in pressure between the two sections) and such as to compare the difference with a reference value stored by the control device. Following the comparison, if the difference between the pressures in the two above-mentioned sections is equal to or close to the set reference value, the control device does not exert any action up until a subsequent control cycle that can be activated manually or determined periodically by the control device or determined by the control device on reaching a threshold of maximum deviation between the real value and the reference value.

The plant also has available a display instrument 34 connected to the control device 25. The control device 25 is configured to control a visualising on the display instrument 34 of the real value (for example, the real difference between the pressures measured in sections 22 and 23), the reference value (for example, a reference pressure difference) or both the values of said physical parameter of the fluid.

In the example of realization shown, the regulating organ 24 and the control device 25 are part of a regulating valve 35 operating downstream of the users 5. The regulating valve 35 includes: a valve body 36 exhibiting at least an inlet 37, an outlet 38 and a channel 39 which sets the inlet 37 in fluid communication with the outlet 38. The valve body 36 exhibits connecting organs 40 arranged at the inlet 37 and the outlet 38 of the valve which enabling fixing the valve on the circuit 4. The connecting organs can be, for example, threading or rapid attachments. The channel 39 exhibits a seating 41 capable of accommodating a check element 42 which in cooperation with the valve body 36 forms the regulating organ 24 and defines a passage opening 43 between the inlet 37 and outlet 38. The passage opening 43 has variable amplitude as a function of the positions assumed by the check element 42 with regard to the valve body 36. The check element 42 is configured such as to act along a predetermined travel path which includes a predetermined number of operating positions that are angularly distinct to one another: in practice, the control device is configured such as to move the check element between an operating position and a next operating position in a next step controlled by the control device 25 itself, as is described in more detail below.

The movement of the check element 42 may be rotary. In the first case the movement takes place by rotation in an angle of movement around an axis of rotation 44 which extends transversally with respect to a prevalent development axis 50 of the channel 5.

Considering the case where the check element 42 performs a rotary movement: to perform a rotary movement, the check element 42 must have an outer surface that is substantially spherical or cylindrical, as can be seen in the accompanying figures. The various operative positions of the element 42 are angularly offset by one or more angular steps of amplitude that are controlled by the control device: at each angular step the control device is programmed to periodically re-verify the difference between the real value and the reference value, and if this difference is not acceptable, the control device will command a new angular step.

In the case of a rotary valve, the control device can be configured such that along at least part of the operating path (such as a tract greater than or equal to 10% of the operating path), the pitch angle has a value of less than 1° (one degree), optionally less than 0.5° (half a degree) in order to avoid destabilisation in the control of the valve.

The control device can also be made to adjust the angular pitch in order to maintain this constant pitch along the operating path.

Alternatively, the control device can adjust the pitch so that the amplitude thereof is variable along a tract (for example, for a distance greater than or equal to 10% of the operative path) or along the entire operating path. For example, a step can be included that is a function of the deviation between the real value of the physical parameter detected by the sensors and the reference value of the physical parameter itself: for example, the step can be relatively large (for example one or more degrees) if the difference between the real value and the reference value is greater than a certain threshold and may be relatively small (e.g. less than one degree) if the difference between the real and the reference values is below a certain threshold. Alternatively, in case of variable pitch, the angular pitch can be reduced progressively during the opening or closing of the valve: optionally the step may for example be reduced gradually, exponentially as the valve is opened.

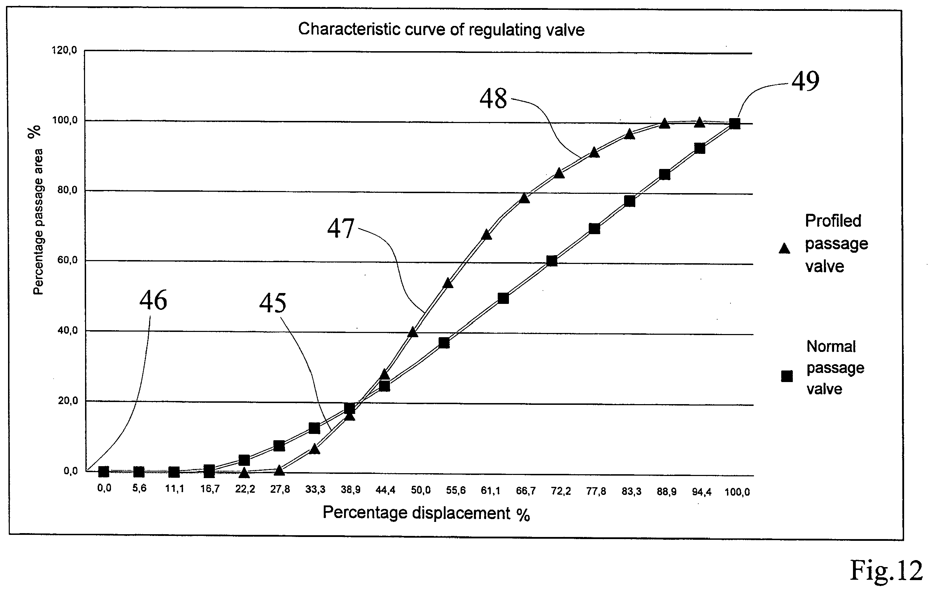

As shown in figure 12, the tract of the operating path where the pitch is variable and possibly less than one degree includes an initial tract 45 between an initial position 46 of complete closure of the passage opening 43 and an intermediate position 47 in which the passage opening 43 is open no more than 50%, optionally not more than 40%. The tract of the path in which the pitch is variable and possibly less than a degree also includes a final section 48 between a final position of complete opening of the passage opening 43 and the intermediate position 47 in which the passage opening 43 is open no more than 40%, optionally not more than 30%.

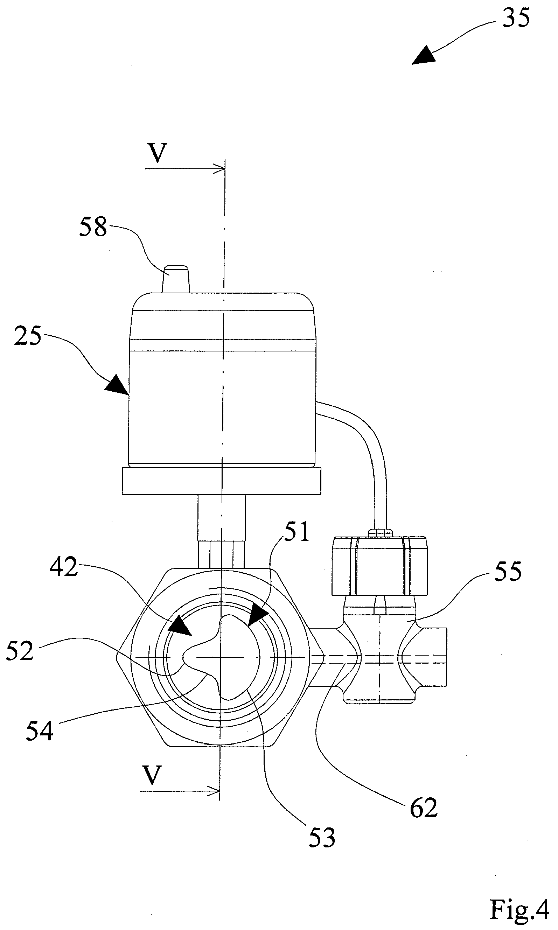

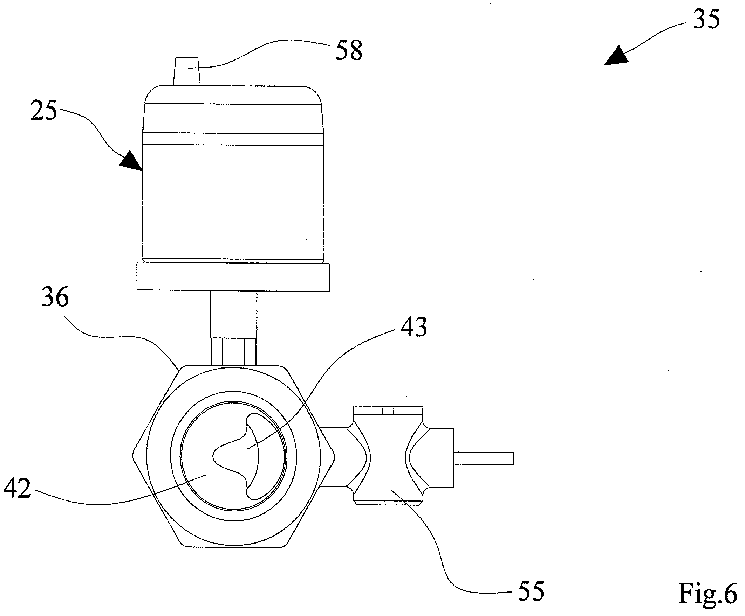

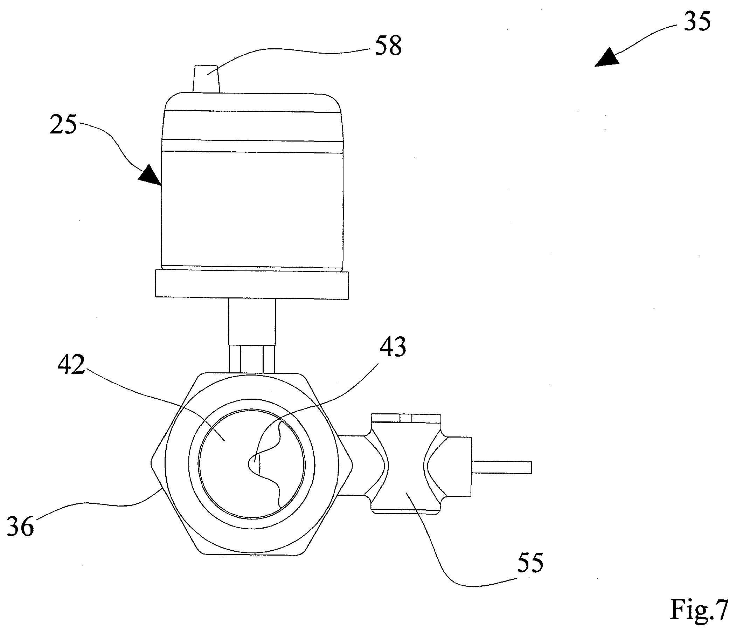

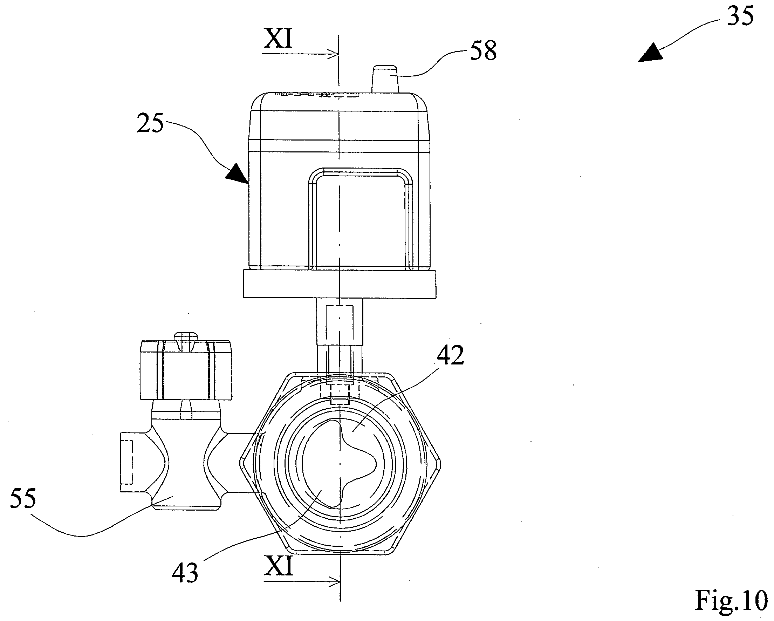

In an embodiment, illustrated in figures 4, 6, 7 and 10, the passage opening 43 is shaped such that, following a movement of the check element 42 over a first and/or final tract (which may coincide with the lines 45, 48 of figure 12) of the operating path, the incremental relationship between the percentage change of the area of the passage opening 43 and the percentage displacement of the check element 42 exhibits an absolute value that is variable along the path but comprised between 0 and 4, optionally between 0 and 2.5. Thanks to this type of variation the increase in area upon the movement of the check element is not excessive and thus enables an efficient control of the pressure fall (and flow) through the valve, enabling better management of the plant balance (again, a curve characteristic of a profiled-opening valve is represent in figure 12 - see the curve with the continuous tract with reference triangles).

As can be seen in figure 12, over the initial tract 45 that includes no more than 30% of the operating path, the incremental ratio between the percentage variation of the passage opening 43 area and the percentage displacement of the check element 42 exhibits an absolute value variable along the path but always comprised between 0 and 4, for example between 0 and 2.5. More specifically, the incremental ratio falls in a range between 0 and 1.5 in the initial tract that is between 20 and 30% of the operating path. In turn, over the final tract 48 that includes no more than 40% of the operating path, the ratio between incremental percentage change of the passage opening 43 and the percentage displacement of the check element 42 exhibits an absolute value that is variable but comprised between 0 and 4, for example between 0 and 2.5. More specifically this incremental ratio falls in a range between 0 and 1.5 in a final tract that is between 20 and 30% of the operating path. Finally, still with reference to figure 12, over an intermediate section 47 of the operating path between the initial tract 45 and the final tract 48 comprising between 20% and 40% of the operating path, the incremental ratio between percentage change of the area of the passage opening 43 and the percentage displacement of the check element 42 exhibits a substantially constant absolute value.

Note that the percentage displacement is defined as the ratio between the displacement of the check element 42 and the operating path.

In turn, the percentage change of the passage opening 43 is defined as the ratio between the change in the passage area following a displacement of the check element 42 and a reference area, for example the area of complete opening of the passage opening 43.

As previously described the check element 42 is operating internally of the channel 39 of valve body 36, and is configured to vary the passage opening 43 through its movement. As can be seen from the figures, the check element 42 is configured to rotate at an angle of motion with respect to an axis of rotation 44 which extends transversally with respect to a prevalent development axis 50 of the channel 39. In particular, the check element 42 can be configured such as to perform a displacement that will reduce or increase the passage opening 43. According to a front view, as can be seen in figure 4, the passage opening 43 is characterized by a front profiling 51 presenting two substantially symmetrical parts in which each part has a first portion 52, shaped as an arc of a circle, a second portion 53, shaped as an arc of a circle having a smaller radius than that of the first portion 52, a connecting curve 54 which connects the first portion 52 with the second portion 53. According to the longitudinal view, the passage opening has a longitudinal shaping 61, which is characterized by a progressively increasing section from the inlet 37 to the outlet 38 of the valve body 36. In the example shown, although the section progressively grows, the outline of this section in the front view can remain constant and equal to what described above and shown in figure 4.

The movement of the regulating organ and therefore the check element 42 is, as mentioned, regulated by the control device 25 which is in particular configured such as to receive at least a first input signal relating to the intensity of the physical parameter of the fluid circulating in the first section of the plant and a second signal relating to the intensity of the same physical parameter of a fluid circulating in the second section of the plant, and then generate an output signal according to the first and second signal. The first and second signals are related to the intensity of fluid pressure respectively in the first and second section of the plant.

The output signal is control differential signal comprising a difference or ratio between the intensity of the first and second signal; for example the control differential signal includes the difference or the ratio between the intensity of fluid pressure in the first section and the intensity of fluid pressure in the second section.

The intensity of the output signal is used to control the position of the check element 42 with a cyclically executed control loop. As a sensor a differential pressure gauge 55 can be used which receives in input the first and second signal and generates in output a control differential signal. The differential pressure gauge 55 is disposed on the valve body 36 of the regulating valve 35 and receives the first signal from the first point 27 and the second signal corresponding to the second point 29 of the plant. The second point is located substantially at the outlet of the regulating valve, and is therefore placed after the check element 42, according to the flow direction. The output 38 of the valve and the pressure differential gauge 55 are in fluid connection via a passage 62.

The intensity of the value measured by the differential pressure gauge 55 is either proportional to or a function of the pressure difference between the first and second points 27, 29. Although reference has been made just above to a physical parameter corresponding to the pressure, the physical parameter can also be the delivery; in this case the differential sensor may be a differential between the flow rate in the first and the second segment.

On the section where the valve body is placed a temperature sensor can also be present which measures the temperature of the fluid in outlet from the valve.

The control device 25 is also configured to allow the setting of at least one reference value, compare the reference value with the value of the differential signal control and generate the output signal as a function of the comparison. The comparison of the signals influences the displacement of the check element 42, which is moved directly by an actuator 56, active on the check element 42, along the operating path. The actuator 56 can be electric or mechanical. The case analyzed shows an actuator 56 of an electrical type that enables placing the check element 42 in a plurality of positions along the operating path. The control device 25 regulates the movement of the check element 42, thereby reducing the difference between the reference value and the value of the control differential signal.

The control device 25 includes a memory which enables storage of a plurality of predetermined reference values and allows the selection thereof by a user.

The control device 25 further comprises setting means 57. The setting means 57 are connected to the control device 25 and enable setting a fixed number of control parameters which define working conditions.

The control device 25 further comprises inlet means 58, which enable a reference value to be set, for example by enabling the setting of a reference differential pressure between the first and second sections.

The control parameters include: a first control parameter on the type of check element 42, a second control parameter relating to an maximum increase in the values of the first and second signal or in the value of the difference between the first and second signals, a third control parameter relating to the type of function which links the outlet signal to the first and the second signals , a fourth control parameter relative to the velocity of convergence between the real value and the reference value.

Going into further detail it can be specified that, in the case where the check element 42 is of the circular type, the first parameter determines the direction of rotation of the check element 42. Instead the second parameter comprises the bottom-scale values of the pressure the differential pressure gauge 55 thus defining a range of predetermined values. The third control parameter specifies the type of control function that links the output signal to said first and second signal: for example, this function includes a link of a proportional or integral or derivative type, or a combination of these. The fourth control parameter regulates the speed of convergence of the real value of the reference value set to the control device 25.

The setting means 57 also enable memorisation of a predetermined number of configurations relating to values of the control parameters useful for the management of the control device 25.

In the case shown in the figures the setting means are micro-switches which have only two values for each parameter setting control.

The regulating valve 35 enables monitoring the real value and the reference value by means of an acoustic signal 59 and/or optical signal means 60. These signalling devices are connected to the control device 25 which is configured to control the acoustic and/or optical means 59, 60 such as to provide: an optical and/or an instantaneous value of the output signal, and/or an optical and/or an acoustic displacement of an instantaneous value of the output signal with respect to a reference value.

## Claims

1. A regulating valve (35) for fluids for plants, in particular conditioning plants, comprising:
at least a valve body (36) exhibiting at least an inlet (37), at least an outlet (38) and at least a channel (39) which sets the inlet (37) in fluid communication with the outlet (38),
at least a fluid check element (42) operating in the channel (39), the fluid check element (42) defining, in cooperation with the valve body (36), a passage opening (43) for fluid between the inlet (37) and the outlet (38) which has a variable size as a function of positions assumed by the check element (42) in relation to the valve body (36) along a predetermined operating path, the check organ (42) being configured such as to rotate with respect to a rotation axis (44) which extends transversally with respect to a prevalent development axis (50) of the channel (39),
at least a control device (25) configured for:
receiving in input at least a first signal relating to an intensity of a physical parameter of the fluid circulating in a first section (22) of the plant and a second signal relating to the intensity of the physical parameter of a fluid circulating in the second section (23) of the plant,
generating an outlet signal as a function of the first signal and the second signal, the outlet signal being usable for controlling the angular position of the check element (42), and wherein
the control device (25) is configured such as to move the check element in a plurality of operating positions which are reciprocally angularly offset, wherein an angular step is defined between an operating position and an angularly subsequent operating position, the control device repeating the receiving and generating stages of receiving and generating in a predetermined number of the operating positions, optionally at each thereof, wherein the size of the angular step is a function of the intensity of the physical parameter of the fluid circulating in the first section (22) and the intensity of the physical parameter of the fluid circulating in a second section (23) of the plant, and wherein the angular step reduces progressively on reduction of a difference between a reference value and a real value given by a difference of intensity of the physical parameter of the fluid circulating in the first section (22) and the intensity of the physical parameter of the fluid circulating in a second section (23).

2. The-regulating valve of claim 1, wherein the angular step, at least over a predetermined tract of the operating path, is less than 1°, optionally less than 0.5°.

3. The regulating valve of claim 1 or 2, wherein at least over a tract of the operating path the angular step is not constant, and wherein the tract in which the step is not constant comprises at least 10% of the operating path.

4. The regulating valve of claims 2 or 3, wherein the tract of the operating path in which the step is not constant and/or is less than 1° comprises an initial tract (45) of the operating path, the initial tract being in turn comprised between an initial position (46) of complete closure of the passage opening (43) and an intermediate position (47) in which the passage opening (43) is open to not more than 40%, optionally not more than 30%; and/or
wherein the tract of the operating path in which the step is not constant and/or is less than 1° comprises a final tract (48) of the operating run, the final tract being in turn comprised between a final position (49) of complete opening of the passage (43) and an intermediate position in which the passage opening (43) is open to not more than 50%, optionally no more than 40%.

5. The regulating valve of one of the preceding claims, wherein the passage opening (43) is shaped such that following a movement of the check element (42) over the initial tract and/or the final tract (45, 48) of the operating path, the incremental ratio between the percentage variation of the area of the passage opening (43) and the percentage displacement of the check element(42) exhibits an absolute value comprised between 0 and 4, optionally between 0 and 2.5.

6. The regulating valve of claim 5, wherein the incremental ratio between the percentage variation of the area of the passage (43) opening and the percentage displacement of the check element (42), over the initial tract (45) which comprises not more than 30% of the operating path, exhibits an absolute value comprised between 0 and 4, optionally between 0 and 2.5,
wherein the incremental ratio between the percentage variation of the area of the passage (43) opening and the percentage displacement of the check element (42), over the final tract (48) which comprises not more than 40% of the operating path, exhibits an absolute value comprised between 0 and 4, optionally between 0 and 2.5, wherein the incremental ratio between percentage variation of the area of the passage (43) opening and the percentage displacement of the check element (42) exhibits an absolute value which is substantially constant over an intermediate tract (47) of the operating run comprised between the initial tract (45) and the final tract (48), and wherein the intermediate tract (47) comprises between 20% and 40% of the operating path,
wherein the percentage variation of the area of the passage (43) opening comprises the ratio between the variation of the passage (43) area following a displacement of the check element (42) and a reference area, and wherein the percentage displacement comprises the ratio between the displacement of the check element (42) and the operating path.

7. The regulating valve of one of the preceding claims, wherein the first signal and the second signal relate to an intensity of the fluid pressure in the first section (22) and the second section (23) of the plant (1), and wherein generating the outlet signal comprises determining a control differential signal comprising a difference or a,ratio between the intensity of the first signal and the second signal,
optionally wherein the control differential signal comprises the difference or ratio between the intensity of the fluid pressure in the first section (22) and the intensity of the fluid pressure in the second section (23), still more optionally wherein the control device (25) comprises a pressure differential gauge (55) which receives in input the first signal and the second signal and generates in output the control differential signal.

8. The regulating valve of any one of the preceding claims, wherein the control device (25) is configured such as to:
enable setting at least a reference value,
compare the reference value with the value of the control differential signal,
generate the output signal as a function of the comparison,
wherein the control device (25) comprises an actuator (56), for example an electrical actuator, acting on the check element (42) the actuator (56) enabling displacement of the check element (42) along the operating path, according to the plurality of positions separated by the step,
and wherein the control device (25) is further configured for:
repeating the stage of comparison and generation at each of the positions;
controlling the size of the step by which the actuator moves the check element as a function of the value of the control differential signal and the reference value,
optionally wherein the control device controls the size of the step according to which the actuator moves the check element as a function of the difference between the value of the differential control signal and the reference value.

9. The regulating valve of any one of the preceding claims, wherein the valve comprises:
acoustic signalling means (59) and/or optical signalling means (60), the acoustic signalling means (59) and/or optical signalling means (60) being connected to the control device (25) which is configured such as to command the signalling means (59, 60) to supply:
an optical and/or acoustic representation of an instant value of the output signal, and/or
an optical and/or acoustic representation of displacement of an instant value of the output signal with respect to a reference value;
setting means (57), also connected to the control device (25), which control device (25) is configured to enable, via the setting means (57), setting a predetermined number of control parameters which define operating conditions of the valve, the control parameters comprising at least a parameter selected from the group having:
a first control parameter relating to a type of movement of the check element,
a second control parameter relating to a maximum excursion of the values of the first signal and the second signal or of the value of the difference between the first signal and the second signal,
a third control parameter relating to the type of function connecting the outlet signal and the first signal and the second signal,
a fourth control parameter relating to a velocity of convergence between the real value and the reference value,
the setting means (57) enabling memorisation of a predetermined number of configurations relating to values of the control parameters which are useful for managing the control device (25), optionally wherein:
the second control parameter comprises bottom scale values of the differential pressure gauge (55),
the function comprises a link of a proportional or integral or derivative type, or a combination thereof,
the fourth control parameter specifies a convergence time defined as a time transitory in which the value of the control differential signal converges to the reference value,
and wherein the valve comprises input means (58) connected with the control device (25) which is configured such as to enable, via the input means (58),
a setting of at least a reference value, optionally enabling setting of the differential pressure between the first section (22) and the second section (23).

10. The regulating valve of any one of the preceding claims from 7 to 9, wherein the control device (25) is configured such as to control the movement of the check element (42), enabling a reduction of the difference between the reference value and the value of the control differential signal,
wherein the incremental ratio between a percentage variation of the area of the passage opening (43) and the percentage displacement of the check element (42), over the initial tract comprised between 20% and 30% of the operating path, falls within a range of between 0 and 1.5, and/or
wherein the incremental ratio between a percentage variation of the area of the passage opening (43) and the percentage displacement of the check organ (42), over the final tract comprised between 20% and 30% of the operating path, falls within a range of between 0 and 1.5.

## Patentansprüche

1. Regelventil (35) für Fluide in Anlagen, insbesondere Klimaanlagen, umfassend:
mindestens einen Ventilkörper (36), der mindestens einen Einlass (37), mindestens einen Auslass (38) und mindestens einen Kanal (39) aufweist, der den Einlass (37) mit dem Auslass (38) in Fluidverbindung setzt, mindestens ein Fluidsperrelement (42), das im Kanal (39) wirkt, wobei das Fluidsperrelement (42) in Zusammenwirken mit dem Ventilkörper (36) eine Durchlassöffnung (43) für Fluid zwischen dem Einlass (37) und dem Auslass (38) definiert, die eine variable Größe in Abhängigkeit von den Positionen besitzt, die das Sperrelement (42) bezogen auf den Ventilkörper (36) entlang einem vorgegebenen Betriebsweg einnimmt, wobei das Sperrorgan (42) konfiguriert ist, um sich in Bezug auf eine Drehachse (44) zu drehen, die sich quer in Bezug auf eine vorherrschende Entwicklungsachse (50) des Kanals (39) erstreckt,
mindestens eine Steuervorrichtung (25), konfiguriert zum:
Empfangen als Eingabe von mindestens einem ersten Signal in Bezug auf die Stärke eines physikalischen Parameters des Fluides, das in einem ersten Abschnitt (22) der Anlage zirkuliert, und einem zweiten Signal in Bezug auf die Stärke des physikalischen Parameters eines Fluides, das in einem zweiten Abschnitt (23) der Anlage zirkuliert,
Erzeugen eines Ausgangssignals in Abhängigkeit des ersten Signals und des zweiten Signals, wobei das Ausgangssignal zur Steuerung der Winkelposition des Sperrelements (42) verwendet werden kann, und wobei die Steuervorrichtung (25) konfiguriert ist, das Sperrelement in eine Mehrzahl von Betriebspositionen zu bewegen, die gegenseitig im Winkel versetzt sind, wobei ein Winkelschritt definiert ist zwischen einer Betriebsposition und einer im Winkel nachfolgenden Betriebsposition, wobei die Steuervorrichtung die Empfangs- und Erzeugungsschritte des Empfangens und Erzeugens in einer vorgegebenen Anzahl der Betriebspositionen wiederholt, wahlweise an jeder derer, wobei die Größe des Winkelschritts abhängig ist von der Stärke des physikalischen Parameters des Fluides, das im ersten Abschnitt (22) zirkuliert, und
von der Stärke des physikalischen Parameters des Fluides, das im zweiten Abschnitt (23) der Anlage zirkuliert, und wobei sich der Winkelschritt bei einer Reduktion einer Differenz zwischen einem Bezugswert und einem wahren Wert, der durch eine Differenz der Stärke des physikalischen Parameters des Fluides, das im ersten Abschnitt (22) zirkuliert, und der Stärke des physikalischen Parameters der Fluides, das in einem zweiten Abschnitt (23) zirkuliert, gegeben ist, zunehmend reduziert.

2. Regelventil nach Anspruch 1, wobei der Winkelschritt zumindest über einen vorgegebenen Teil des Betriebsweges weniger als 1°, wahlweise weniger als 0.5°, beträgt.

3. Regelventil nach Anspruch 1 oder 2, wobei der Winkelschritt zumindest über einen Teil des Betriebsweges nicht konstant ist, und wobei der Teil, in dem der Schritt nicht konstant ist, mindestens 10% des Betriebsweges umfasst.

4. Regelventil nach Anspruch 2 oder 3, wobei der Teil des Betriebswegs, in dem der Schritt nicht konstant ist und/oder weniger als 1° beträgt, einen Anfangsteil (45) des Betriebsweges umfasst, wobei der Anfangsteil wiederum zwischen einer Anfangsposition (46) vollständiger Schließung der Durchlassöffnung (43) und einer Zwischenposition (47), in der die Durchlassöffnung (43) zu nicht mehr als 40%, wahlweise nicht mehr als 30%, geöffnet ist, umfasst ist; und/oder wobei der Teil des Betriebsweges, in dem der Schritt nicht konstant ist und/oder weniger als 1° beträgt, einen Endteil (48) des Betriebslaufes umfasst, wobei der Endteil wiederum zwischen einer Endposition (49) vollständiger Öffnung des Durchlasses (43) und einer Zwischenposition, in der die Durchlassöffnung zu nicht mehr als 50%, wahlweise nicht mehr als 40%, geöffnet ist, umfasst ist.

5. Regelventil nach einem der vorhergehenden Ansprüche, wobei die Durchlassöffnung (43) so geformt ist, dass, nachfolgend auf eine Bewegung des Sperrelements (42) über den Anfangsteil und/oder den Endteil (45, 48) des Betriebsweges, das inkrementelle Verhältnis zwischen der prozentualen Änderung der Fläche der Durchlassöffnung (43) und der prozentualen Verschiebung des Sperrelements (42) einen absoluten Wert aufweist, der zwischen 0 und 4, wahlweise zwischen 0 und 2,5, umfasst ist

6. Regelventil nach Anspruch 5, wobei das inkrementelle Verhältnis zwischen der prozentualen Änderung der Fläche des Durchlassöffnung (43) und der prozentualen Verschiebung des Sperrelements (42) über den Anfangsteil (45), der nicht mehr als 30% des Betriebswegs umfasst, einen absoluten Wert aufweist, der zwischen 0 und 4, wahlweise zwischen 0 und 2,5, umfasst ist,
wobei das inkrementelle Verhältnis zwischen der prozentualen Änderung der Fläche der Durchlassöffnung (43) und der prozentualen Verschiebung des Sperrelements (42) über den Endteil (48), der nicht mehr als 40% des Betriebswegs umfasst, einen absoluten Wert aufweist, der zwischen 0 und 4, wahlweise zwischen 0 und 2,5, umfasst ist,
wobei das inkrementelle Verhältnis zwischen der prozentualen Änderung der Fläche der Durchlassöffnung (43) und der prozentualen Verschiebung des Sperrelements (42) einen absoluten Wert aufweist, der über einen Zwischenabschnitt (47) des Betriebslaufes zwischen dem Anfangsteil (45) und dem Endteil (48) im Wesentlichen konstant ist, und wobei der Zwischenabschnitt (47) zwischen 20% und 40% des Betriebswegs umfasst,
wobei die prozentuale Änderung der Fläche der Durchlassöffnung (43) das Verhältnis zwischen der Änderung der Durchlassfläche (43) nach einer Verschiebung des Sperrelements (42) und einer Bezugsfläche umfasst, und wobei die prozentuale Verschiebung das Verhältnis zwischen der Verschiebung des Sperrelements (42) und dem Betriebsweg umfasst.

7. Regelventil nach einem der vorhergehenden Ansprüche, wobei sich das erste Signal und das zweite Signal auf eine Stärke des Fluiddrucks im ersten Abschnitt (22) und im zweiten Abschnitt (23) der Anlage (1) beziehen, und wobei das Erzeugen des Ausgangssignals die Festlegung eines Steuerdifferenzsignals umfasst, umfassend eine Differenz oder ein Verhältnis zwischen der Stärke des ersten Signals und des zweiten Signals, wobei wahlweise das Steuerdifferenzsignal die Differenz oder das Verhältnis zwischen der Stärke des Fluiddrucks im ersten Abschnitt (22) und der Stärke des Fluiddrucks im zweiten Abschnitt (23) umfasst, wobei weiter wahlweise die Steuervorrichtung (25) ein Differenzdruckmessgerät (55) umfasst, das als Eingabe das erste Signal und das zweite Signal empfängt und als Ausgabe das Steuerdifferenzsignal erzeugt.

8. Regelventil nach einem der vorhergehenden Ansprüche, wobei die Steuervorrichtung (25) konfiguriert ist, um:
das Einstellen von mindestens einem Bezugswert zu ermöglichen,
den Bezugswert mit dem Wert des Steuerdifferenzsignals zu vergleichen, und
das Ausgangssignal in Abhängigkeit von dem Vergleich zu erzeugen,
wobei die Steuervorrichtung (25) einen Aktuator (56), beispielsweise einen elektrischen Aktuator, umfasst, der auf das Sperrelement (42) einwirkt, wobei der Aktuator (56) die Verschiebung des Sperrelements (42) entlang des Betriebswegs gemäß der Mehrzahl an Positionen, die durch den Schritt getrennt sind, ermöglicht,
und wobei die Steuervorrichtung (25) weiter konfiguriert ist, zum:
Wiederholen der Phase des Vergleichens und Erzeugens an jeder der Positionen;
Steuern der Größe des Schrittes, um den der Aktuator das Sperrelement in Abhängigkeit des Wertes des Steuerdifferenzsignals und des Bezugswertes bewegt, wahlweise wobei die Steuervorrichtung die Größe des Schrittes, gemäß dem der Aktuator das Sperrelement bewegt, in Abhängigkeit der Differenz zwischen dem Wert des Differenzsteuersignals und dem Bezugswert steuert.

9. Regelventil nach einem der vorhergehenden Ansprüche, wobei das Ventil umfasst:
akustische Signalmittel (59) und/oder optische Signalmittel (60), wobei die akustischen Signalmittel (59) und/oder die optischen Signalmittel (60) mit der Steuervorrichtung (25) verbunden sind, die konfiguriert ist, um den Signalmitteln (59, 60) zu befehlen:
eine optische und/oder akustische Darstellung eines Momentanwertes des Ausgangssignals, und/oder eine optische und/oder akustische Darstellung der Verschiebung eines Momentanwertes des Ausgangssignals bezogen auf einen Bezugswert, bereitzustellen;
Einstellmittel (57), ebenfalls verbunden mit der Steuervorrichtung (25), wobei die Steuervorrichtung (25) konfiguriert ist, über die Einstellmittel (57), das Einstellen einer vorgegebenen Anzahl von Steuerparametern zu ermöglichen, die die Betriebsbedingungen des Ventils definieren, wobei die Steuerparameter mindestens einen Parameter umfassen, der ausgewählt ist aus der Gruppe aufweisend:
einen ersten Steuerparameter bezogen auf eine Bewegungsart des Sperrelements,
einen zweiten Steuerparameter bezogen auf eine Höchstabweichung der Werte des ersten Signals und des zweiten Signals oder des Wertes der Differenz zwischen dem ersten Signal und dem zweiten Signal,
einen dritten Steuerparameter bezogen auf die Art der Abhängigkeit, die das Ausgangssignal mit dem ersten Signal und dem zweiten Signal verbindet,
einen vierten Steuerparameter bezogen auf die Konvergenzgeschwindigkeit zwischen dem Istwert und dem Bezugswert,
wobei die Einstellmittel (57) die Speicherung einer vorgegebenen Anzahl von Konfigurationen bezogen auf Werte der Steuerparameter ermöglichen, die zum Leiten der Steuervorrichtung (25) nützlich sind, wahlweise wobei:
der zweite Steuerparameter untere Skalenwerte des Differenzdruckmessgeräts (55) umfasst,
die Funktion eine Verknüpfung von Proportional- oder Integral- oder Differentialart oder eine Kombination derselben umfasst,
der vierte Steuerparameter eine Konvergenzzeit angibt, die als zeittransitorisch definiert wird, in der der Wert des Steuerdifferenzsignals gegen den Bezugswert konvergiert,
und wobei das Ventil Eingabemittel (58) umfasst, die mit der Steuervorrichtung (25) verbunden sind, die konfiguriert ist, über die Eingabemittel (58) das Einstellen von mindestens einem Bezugswert zu ermöglichen, wahlweise das Einstellen des Differentialdrucks zwischen dem ersten Abschnitt (22) und dem zweiten Abschnitt (23) ermöglichen.

10. Regelventil nach einem der vorhergehenden Ansprüche von 7 bis 9, wobei die Steuervorrichtung (25) konfiguriert ist, um die Bewegung des Sperrelements (42) zu steuern, eine Senkung der Differenz zwischen dem Bezugswert und dem Wert des Steuerdifferenzsignals ermöglichend,
wobei das zunehmende Verhältnis zwischen einer prozentualen Änderung der Fläche der Durchlassöffnung (43) und der prozentualen Verschiebung des Sperrelements (42) über den Anfangsteil, der zwischen 20% und 30% des Betriebsweges umfasst, in einen Bereich zwischen 0 und 1,5 fällt, und/oder
wobei das zunehmende Verhältnis zwischen einer prozentualen Änderung der Fläche der Durchlassöffnung (43) und der prozentualen Verschiebung des Sperrorgans (42) über den Endteil, der zwischen 20% und 30% des Betriebsweges umfasst, in einen Bereich zwischen 0 und 1,5 fällt.

## Revendications

1. Vanne de régulation (35) de fluides pour des installations, en particulier des installations de conditionnement, comprenant :
au moins un corps de vanne (36) présentant au moins une admission (37), au moins un refoulement (38) et au moins un canal (39) qui met l'admission (37) en communication fluidique avec le refoulement (38),
au moins un élément de vérification de fluide (42) fonctionnant dans le canal (39), l'élément de vérification de fluide (42) définissant, en coopération avec le corps de vanne (36), une ouverture de passage (43) pour le fluide entre l'admission (37) et le refoulement (38) qui a une taille variable en fonction de positions adoptées par l'élément de vérification (42) par rapport au corps de vanne (36) le long d'un chemin fonctionnel prédéterminé, l'organe de vérification (42) étant configuré de façon à tourner par rapport à un axe de rotation (44) qui s'étend transversalement par rapport à un axe de développement prévalent (50) du canal (39),
au moins un dispositif de commande (25) configuré pour :
recevoir en entrée au moins un premier signal relatif à une intensité d'un paramètre physique du fluide circulant dans une première section (22) de l'installation et un second signal relatif à l'intensité du paramètre physique d'un fluide circulant dans la seconde section (23) de l'installation,
générer un signal de sortie en fonction du premier signal et du second signal, le signal de sortie étant utilisable pour commander la position angulaire de l'élément de vérification (42), et dans laquelle
le dispositif de commande (25) est configuré de façon à bouger l'élément de vérification dans une pluralité de positions fonctionnelles qui sont décalées angulairement et réciproquement, dans laquelle un palier angulaire est défini entre une position fonctionnelle et une position fonctionnelle ultérieure angulairement, le dispositif de commande répétant les étapes de réception et de génération dans un nombre prédéterminé des positions fonctionnelles, facultativement à chacune de celles-ci, dans laquelle la taille du palier angulaire est une fonction de l'intensité du paramètre physique du fluide circulant dans la première section (22) et de l'intensité du paramètre physique du fluide circulant dans une seconde section (23) de l'installation, et dans laquelle le palier angulaire diminue progressivement lors de la réduction d'une différence entre une valeur de référence et une valeur réelle donnée par une différence d'intensité du paramètre physique du fluide circulant dans la première section (22) et de l'intensité du paramètre physique du fluide circulant dans une seconde section (23).

2. Vanne de régulation selon la revendication 1, dans laquelle le palier angulaire, au moins sur une étendue prédéterminée du chemin fonctionnel, est inférieur à 1 °, facultativement inférieur à 0,5°.

3. Vanne de régulation selon la revendication 1 ou 2, dans laquelle au moins sur une étendue du chemin fonctionnel, le palier angulaire n'est pas constant, et dans laquelle l'étendue dans laquelle le palier n'est pas constant comprend au moins 10 % du chemin fonctionnel.

4. Vanne de régulation selon les revendications 2 ou 3, dans laquelle l'étendue du chemin fonctionnel dans laquelle le palier n'est pas constant et/ou est inférieur à 1° comprend une étendue initiale (45) du chemin fonctionnel, l'étendue initiale étant à son tour comprise entre une position initiale (46) de fermeture totale de l'ouverture de passage (43) et une position intermédiaire (47) dans laquelle l'ouverture de passage (43) est ouverte à pas plus de 40 %, facultativement pas plus de 30 % ; et/ou
dans laquelle l'étendue du chemin fonctionnel dans laquelle le palier n'est pas constant et/ou est inférieur à 1° comprend une étendue finale (48) du trajet fonctionnel, l'étendue finale étant à son tour comprise entre une position finale (49) d'ouverture totale du passage (43) et une position intermédiaire dans laquelle l'ouverture de passage (43) est ouverte à pas plus de 50 %, facultativement pas plus de 40 %.

5. Vanne de régulation selon l'une des revendications précédentes, dans laquelle l'ouverture de passage (43) est formée de sorte que suite à un mouvement de l'élément de vérification (42) sur l'étendue initiale et/ou l'étendue finale (45, 48) du chemin fonctionnel, le rapport incrémentiel entre la variation en pourcentage de l'aire de l'ouverture de passage (43) et le déplacement en pourcentage de l'élément de vérification (42) présente une valeur absolue comprise entre 0 et 4, facultativement entre 0 et 2,5.

6. Vanne de régulation selon la revendication 5, dans laquelle le rapport incrémentiel entre la variation en pourcentage de l'aire de l'ouverture de passage (43) et le déplacement en pourcentage de l'élément de vérification (42), sur l'étendue initiale (45) qui comprend pas plus de 30 % du chemin fonctionnel, présente une valeur absolue comprise entre 0 et 4, facultativement entre 0 et 2,5,
dans laquelle le rapport incrémentiel entre la variation en pourcentage de l'aire de l'ouverture de passage (43) et le déplacement en pourcentage de l'élément de vérification (42), sur l'étendue finale (48) qui comprend pas plus de 40 % du chemin fonctionnel, présente une valeur absolue comprise entre 0 et 4, facultativement entre 0 et 2,5,
dans laquelle le rapport incrémentiel entre la variation en pourcentage de l'aire de l'ouverture de passage (43) et le déplacement en pourcentage de l'élément de vérification (42) présente une valeur absolue qui est sensiblement constante sur une étendue intermédiaire (47) du trajet fonctionnel compris entre l'étendue initiale (45) et l'étendue finale (48), et dans laquelle l'étendue intermédiaire (47) comprend entre 20 % et 40 % du chemin fonctionnel,
dans laquelle la variation en pourcentage de l'aire de l'ouverture de passage (43) comprend le rapport entre la variation de l'aire de passage (43) suite à un déplacement de l'élément de vérification (42) et une aire de référence, et dans laquelle le déplacement en pourcentage comprend le rapport entre le déplacement de l'élément de vérification (42) et le chemin fonctionnel.

7. Vanne de régulation selon l'une des revendications précédentes, dans laquelle le premier signal et le second signal concernent une intensité de la pression de fluide dans la première section (22) et la seconde section (23) de l'installation (1), et dans laquelle la génération du signal de sortie comprend la détermination d'un signal différentiel de commande comprenant une différence ou un rapport entre l'intensité du premier signal et du second signal,
facultativement dans laquelle le signal différentiel de commande comprend la différence ou le rapport entre l'intensité de la pression de fluide dans la première section (22) et l'intensité de la pression de fluide dans la seconde section (23), toujours facultativement dans laquelle le dispositif de commande (25) comprend un manomètre différentiel (55) qui reçoit en entrée le premier signal et le second signal et génère en sortie le signal différentiel de commande.

8. Vanne de régulation selon l'une quelconque des revendications précédentes, dans laquelle le dispositif de commande (25) est configuré de façon à :
permettre le réglage d'au moins une valeur de référence,
comparer la valeur de référence à la valeur du signal différentiel de commande,
générer le signal de sortie en fonction de la comparaison,
dans laquelle le dispositif de commande (25) comprend un actionneur (56), par exemple un actionneur électrique, agissant sur l'élément de vérification (42), l'actionneur (56) permettant un déplacement de l'élément de vérification (42) le long du chemin fonctionnel, selon la pluralité de positions séparées par le palier,
et dans laquelle le dispositif de commande (25) est en outre configuré pour :
répéter l'étape de comparaison et de génération à chacune des positions ;
commander la taille du palier selon lequel l'actionneur bouge l'élément de vérification en fonction de la valeur du signal différentiel de commande et de la valeur de référence,
facultativement dans laquelle le dispositif de commande commande la taille du palier selon lequel l'actionneur bouge l'élément de vérification en fonction de la différence entre la valeur du signal différentiel de commande et la valeur de référence.

9. Vanne de régulation selon l'une quelconque des revendications précédentes, dans laquelle la vanne comprend :
un moyen de signalisation acoustique (59) et/ou un moyen de signalisation optique (60), le moyen de signalisation acoustique (59) et/ou le moyen de signalisation optique (60) étant raccordé(s) au dispositif de commande (25) qui est configuré de façon à ordonner aux moyens de signalisation (59, 60) de fournir :
une représentation optique et/ou acoustique d'une valeur instantanée du signal de sortie, et/ou
une représentation optique et/ou acoustique de déplacement d'une valeur instantanée du signal de sortie par rapport à une valeur de référence ;
un moyen de réglage (57), également raccordé au dispositif de commande (25), lequel dispositif de commande (25) est configuré pour permettre, via le moyen de réglage (57), le réglage d'un nombre prédéterminé de paramètres de commande qui définissent des conditions fonctionnelles de la vanne, les paramètres de commande comprenant au moins un paramètre choisi dans le groupe comportant :
un premier paramètre de commande relatif à un type de mouvement de l'élément de vérification,
un deuxième paramètre de commande relatif à une excursion maximale des valeurs du premier signal et du second signal ou de la valeur de la différence entre le premier signal et le second signal,
un troisième paramètre de commande relatif au type de fonction reliant le signal de sortie et le premier signal et le second signal,
un quatrième paramètre de commande relatif à une vitesse de convergence entre la valeur réelle et la valeur de référence,
le moyen de réglage (57) permettant la mémorisation d'un nombre prédéterminé de configurations relatives à des valeurs des paramètres de commande qui sont utiles pour gérer le dispositif de commande (25), facultativement dans laquelle :
le deuxième paramètre de commande comprend des valeurs d'échelle basse du manomètre différentiel (55),
la fonction comprend un lien de type proportionnel ou intégral ou dérivatif, ou une combinaison de ceux-ci,
le quatrième paramètre de commande spécifie un temps de convergence défini en tant que temps transitoire pendant lequel la valeur du signal différentiel de commande converge vers la valeur de référence,
et dans laquelle la vanne comprend un moyen d'entrée (58) raccordé au dispositif de commande (25) qui est configuré de façon à permettre, via le moyen d'entrée (58), un réglage d'au moins une valeur de référence, permettant facultativement le réglage de la pression différentielle entre la première section (22) et la seconde section (23).

10. Vanne de régulation selon l'une quelconque des revendications 7 à 9 précédentes, dans laquelle le dispositif de commande (25) est configuré de façon à commander le mouvement de l'élément de vérification (42), permettant une réduction de la différence entre la valeur de référence et la valeur du signal différentiel de commande,
dans laquelle le rapport incrémentiel entre une variation en pourcentage de l'aire de l'ouverture de passage (43) et le déplacement en pourcentage de l'élément de vérification (42), sur l'étendue initiale comprise entre 20 % et 30 % du chemin fonctionnel, se situe dans une plage entre 0 et 1,5, et/ou
dans laquelle le rapport incrémentiel entre une variation en pourcentage de l'aire de l'ouverture de passage (43) et le déplacement en pourcentage de l'organe de vérification (42), sur l'étendue finale comprise entre 20 % et 30 % du chemin fonctionnel, se situe dans une plage entre 0 et 1,5.
